# EUROPEAN PATENT APPLICATION

(11) **EP 4 659 981 A1**
(43) Date of publication of application: **10.12.2025**
(21) Application number: 25176226.6
(22) Date of filing: 13.05.2025
(51) Int. Cl.: B60K 35/10, B60K 35/22, G06F 3/041

(54) **ELECTRONIC DEVICE**

(30) Priority: 04.06.2024 CN 202410714649
(71) Applicant: Carux Technology Pte. Ltd., Singapore 339510 (SG)
(72) Inventor: WANG, Tzu-Ting, Tainan (TW); SUNG, Li-Wei, Tainan (TW)
(74) Representative: 2K Patentanwälte Blasberg Kewitz & Reichel

(57) **Abstract**

An electronic device is provided. The electronic device includes a display panel and a cover plate disposed relative to the display panel. The cover plate includes a substrate, a photocatalyst layer disposed on the substrate, and a light adjustment layer disposed on the substrate. The light adjustment layer adjusts the optical properties of ultraviolet light incident onto the cover plate.

## Description

### CROSS REFERENCE TO RELATED APPLICATIONS

This application claims priority of China Patent Application No. 202410714649.3, filed on June 4, 2024, the entirety of which is incorporated by reference herein.

### BACKGROUND

### Technical Field

The present disclosure relates to an electronic device, and in particular it relates to an electronic device equipped with a controllable ultraviolet (UV) light source and a photocatalyst layer coated on the surface of a touch screen.

### Description of the Related Art

When using the touch screen of a car monitor, it is easy to leave fingerprints, oil, and other dirt due to touching it with a finger. The traditional method of dealing with this issue is to coat or affix a hydrophobic film to the surface of the touch screen, and users can wipe the screen with water, alcohol, or other detergents combined using toilet paper or rags. However, this method requires the user to prepare additional cleaning items and to spend time cleaning.

### SUMMARY

In accordance with one embodiment of the present disclosure, an electronic device is provided. The electronic device includes a display panel and a cover plate disposed relative to the display panel. The cover plate includes a substrate, a photocatalyst layer disposed on the substrate, and a light adjustment layer disposed on the substrate. The light adjustment layer adjusts the optical properties of ultraviolet (UV) light incident onto the cover plate.

### BRIEF DESCRIPTION OF THE DRAWINGS

The disclosure can be more fully understood from the following detailed description when read with the accompanying figures. It is worth noting that in accordance with standard practice in the industry, various features are not drawn to scale. In fact, the dimensions of the various features may be arbitrarily increased or reduced for clarity of discussion.
FIG. 1 shows a cross-sectional view of an electronic device in accordance with one embodiment of the present disclosure;
FIG. 2 shows a perspective view of an electronic device in accordance with one embodiment of the present disclosure;
FIG. 3A shows a perspective view of an electronic device in accordance with one embodiment of the present disclosure;
FIG. 3B shows a cross-sectional view of an electronic device in accordance with one embodiment of the present disclosure;
FIG. 4 shows a top view of an electronic device in accordance with one embodiment of the present disclosure;
FIG. 5 shows a top view of an electronic device in accordance with one embodiment of the present disclosure;
FIG. 6 shows a top view of an electronic device in accordance with one embodiment of the present disclosure;
FIG. 7 shows a schematic view of an interior space of a car;
FIG. 8 shows a schematic view of an interior space of a car;
FIG. 9 shows a cross-sectional view of an electronic device in accordance with one embodiment of the present disclosure;
FIG. 10 shows a schematic view of an interior space of a car;
FIG. 11 shows a three-dimensional view of an electronic device in accordance with one embodiment of the present disclosure; and
FIG. 12 shows a cross-sectional view of an electronic device in accordance with one embodiment of the present disclosure;.

### DETAILED DESCRIPTION

The following description lists various embodiments of this disclosure to introduce the basic concepts of this case, and is not intended to limit the content of this case. The actual scope of the invention should be defined according to the scope of the patent application. Reference will now be made in detail to exemplary embodiments of the present disclosure, examples of which are illustrated in the accompanying drawings. Whenever possible, the same reference numbers are used in the drawings and descriptions to refer to the same or similar parts.

Throughout this disclosure and the appended claims, certain words are used to refer to specific components. Those skilled in the art will appreciate that the device manufacturers may refer to the same components by different names. This article is not intended to differentiate between components that have the same functionality but different names. In the following description and claims, the words "comprise", "include" and "contain" are open-ended words, and therefore they should be interpreted to mean "comprising but not limited to..."

The directional terms mentioned in this article, such as: "up", "down", "front", "back", "left", "right", etc., are only for reference to the directions of the accompanying drawings. The directional terms in this paper are used to define the relative positions of the illustrated components, and are not intended to limit the disclosure. In the drawings, each figure illustrates the general features of methods, structures, and/or materials used in particular embodiments. However, these drawings should not be interpreted as defining or limiting the scope or nature encompassed by these embodiments. For example, the relative sizes, thicknesses, and locations of the different layers, regions, and/or structures may be shrunken or enlarged for clarity.

In this paper, one structure (or layer, or component, or substrate) located on/above another structure (or layer, or component, or substrate) may mean that the two structures are directly connected, or the two structures are adjacent but not directly connected. Indirect connection means that there is at least one intermediary structure (or intermediary layer, intermediary component, intermediary substrate, intermediary spacer) between two structures. The lower surface of upper structure is adjacent to or directly connected to the upper surface of the intermediary structure. The upper surface of the lower structure is adjacent to or directly connected to the lower surface of the intermediate structure. The intermediary structure may be a single-layer/multi-layer physical structure, or a non-physical structure (there is no limit). In this disclosure, when a structure is disposed "on" another structure, it may mean that the structure is "directly" on the other structure, or that the structure is "indirectly" on the other structure (that is, between the two structures, at least one other structure is also sandwiched.

The terms "about", "equal to", "the same", "substantially" or "roughly" are generally interpreted to mean an offset within 20% of a given value or range, or to mean an offset within 10%, 5%, 3%, 2%, 1% or 0.5% of a given value or range.

Furthermore, any two numerical values or directions used for comparison may have certain errors. If the first value is equal to the second value, it implies that there may be a tolerable error difference about 10%. If a first direction is perpendicular or approximately perpendicular to a second direction, the angle between the first direction and the second direction may be 80-100 degrees. If the first direction is parallel or substantially parallel to the second direction, the angle between the first direction and the second direction may be 0-10 degrees.

The ordinal numbers used in the description and claims, such as "first", "second", etc., are used for identification between components. They do not imply the existence of a component with the previous ordinal number. Such ordinal numbers do not represent the order of the components, or the order of manufacturing procedures. These ordinal numbers are used to clearly distinguish two components with the same naming. The ordinal numbers given to the components in the claims may be different from the ordinal numbers given to the components in the description. Accordingly, the first component in the description may be the second component in the claim.

In the disclosure, descriptions like "a given range is from a first value to a second value" or "a given range falls within the range between a first value and a second value" indicate that the given range includes the first value, the second value, and other values between them.

It should be understood that in the exemplary embodiments of the disclosure, the depth, thickness, width, or height of each component, or the spacing or distance between components may be measured by an optical microscope (OM), a scanning electron microscope (SEM), a film thickness measurement device (α-step), or an ellipsometer. In some exemplary embodiments, a cross-sectional structural image of a component may be captured by a scanning electron microscope, which also measures the depth, thickness, width or height of each component, or the spacing or distance between components.

According to the embodiments of the disclosure, an electronic device may include a display device, an assembled device, a touch display, a sensing device, an antenna device, a packaging device, a curved display, or a free shape display, but it is not limited thereto. The electronic device may use display media like liquid crystal, light-emitting diodes, fluorescence, phosphor, or any other suitable display media, or a combination of the above, but it is not limited thereto. A display device may be a non-self-luminous display device or a self-luminous display device. An electronic device may include an electronic element. An electronic element may be a passive element or an active element, for example, a capacitor, a resistor, an inductor, a diode, a driving element, or a transistor, etc. A diode may include a light-emitting diode (LED) or a photodiode. A light-emitting diode (LED) may include an organic light-emitting diode (OLED), a mini LED, a micro LED, or a quantum-dot LED, but it is not limited thereto. An assembled device may be an assembled display device, but it is not limited thereto. An antenna device may be a liquid-crystal type antenna device or a varactor-diode type antenna device, but it is not limited thereto. A packaging device can be used in wafer-level packaging (WLP) technology or panel-level packaging (WLP) technology, for example, chip-first or RDL-first technology. It should be noted that the electronic device can be any combination of the above, but it is not limited thereto. In addition, the electronic device may be a bendable or flexible electronic device. In addition, the shape of the electronic device may be a rectangular shape, a circular shape, a polygonal shape, a shape with curved edges, or other suitable shapes. The electronic device may have peripheral systems, for example, a driving system, a control system, a light source system, a structural system, etc., to support the display device or assembled device.

It should be noted that in the embodiments shown below, features in several different embodiments may be replaced, reorganized, or combined without departing from the spirit of the present disclosure. Features in various embodiments may be combined as long as they do not violate the spirit of the disclosure or conflict with each other.

Unless otherwise defined, all terms (including technical and scientific terms) used herein have the same meaning as commonly understood by one of ordinary skill in the art. It is understood that these terms, such as those defined in commonly used dictionaries, should be interpreted to have a meaning consistent with the relevant technology and the background or context of the present disclosure, and should not be interpreted in an idealized or overly formal manner (unless otherwise defined).

In addition, the word "adjacent" in the description and claims, for example, is used to describe mutual proximity and does not necessarily mean that they are in contact with each other.

In addition, descriptions such as "when..." or "at the moment" in this disclosure means a period of time, from prior to the event to later than the event. It is not limited to events happen just at the same time, which are announced in advance here. Furthermore, "disposed on" and other similar descriptions in this disclosure indicate the relative positions of objects, and do not limit to a physical contact between the objects, unless there are special limitations. Furthermore, when the present disclosure describe multiple functions, and the word "or" is used in listing the functions, it means that the functions can exist independently, but it does not exclude that multiple functions may exist at the same time.

In addition, words such as "electrically connected" or "coupled" in the description and claims not only refer to a direct electrical connection between the different objects, but also refer to an indirect electrical connection between the different objects. Electrical connection includes direct electrical connection, indirect electrical connection, or wireless communication between the different objects.

In this present disclosure, when "or" is used as a connective word between multiple elements, unless otherwise stated, the expressions of "and" and "or" are included.

In the present disclosure, when a certain element is disposed on another element, it means that the certain element may be disposed on a certain side of another element, such as but not limited to above, below, left, right, front, or back side. The two elements may not directly contact to each other.

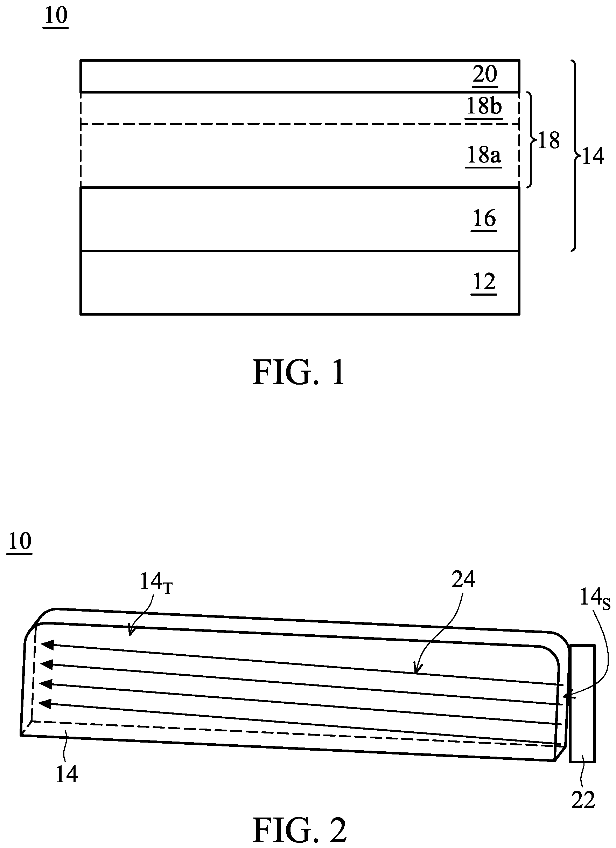

Referring to FIG. 1, in accordance with one embodiment of the present disclosure, an electronic device 10 is provided. FIG. 1 is a schematic cross-sectional view of the electronic device 10.

As shown in FIG. 1, the electronic device 10 includes a display panel 12 and a cover plate 14. The cover plate 14 is disposed relative to the display panel 12. The cover plate 14 includes a substrate 16, a photocatalyst layer 18, and a light adjustment layer 20. The photocatalyst layer 18 is disposed on the substrate 16. The light adjustment layer 20 is disposed on the substrate 16. It is worth noting that the light adjustment layer 20 adjusts the optical properties of ultraviolet (UV) light incident onto the cover plate 14, for example, adjusting the absorption rate, transmittance, reflectivity and traveling direction of the UV light incident onto the cover plate 14.

In accordance with some embodiments, the light adjustment layer 20 may include, for example, a UV absorber, an anti-UV patch, an anti-UV optical film, a liquid-crystal film, or a total reflection film, but it is not limited thereto. In accordance with some embodiments, the total reflection film may include, for example, metal oxides, metals, or a combination thereof, but it is not limited thereto.

In accordance with some embodiments, when the light adjustment layer 20 includes a UV absorber, an anti-UV patch, or an anti-UV optical film, the UV light incident onto the cover plate 14 can be absorbed by the light adjustment layer 20, so that the UV light is not easily emitted from the cover plate 14 to human eyes. That is, the UV absorber, the anti-UV patch, or the anti-UV optical film used as the light adjustment layer 20 can be used to adjust the absorption rate of the UV light incident onto the cover plate 14.

In accordance with some embodiments, when the light adjustment layer 20 includes a liquid-crystal film, the light adjustment layer 20 can control the degree and timing of outward penetration of the UV light incident onto the cover plate 14. That is, the liquid-crystal film as the light adjustment layer 20 can be used to adjust the transmittance of the UV light incident onto the cover plate 14.

In accordance with some embodiments, when the light adjustment layer 20 includes a total reflection film, the light adjustment layer 20 can cause the UV light incident onto the cover plate 14 to be completely reflected in the cover plate 14, so that the UV light is not easily emitted from the cover plate 14 to human eyes. That is, the total reflection film as the light adjustment layer 20 can be used to adjust the reflectivity of the UV light incident onto the cover plate 14.

In accordance with some embodiments, the photocatalyst layer 18 may include, for example, an anti-reflection (AR) layer, an anti-smudge (AS) layer, or a combination thereof, but it is not limited thereto. In accordance with some embodiments, the photocatalyst layer 18 may include an anti-reflection layer 18a and an anti-smudge layer 18b at the same time, as shown in FIG. 1. In accordance with some embodiments, the photocatalyst layer 18 may include one of the anti-reflection layer 18a and the anti-smudge layer 18b. For example, the photocatalyst layer 18 includes the anti-reflection layer 18a, but does not include the anti-smudge layer 18b (not shown), or the photocatalyst layer 18 includes the anti-smudge layer 18b, but does not include the anti-reflection layer 18a (not shown). In accordance with some embodiments, the anti-reflection layer 18a may include a multi-layer structure, for example, formed by alternately stacking high-refractive-index materials (e.g., titanium dioxide (TiO₂)) and low-refractive-index materials (e.g., silicon dioxide (SiO₂)), but it is not limited thereto. In accordance with some embodiments, the anti-smudge layer 18b may include a single-layer or a multi-layer structure. In accordance with some embodiments, the anti-smudge layer 18b may include fluorine-free materials, such as acrylate polymers, octadecyltrimethoxysilane (OTMS), tetraethoxysilane (TEOS), polyethylene glycol trimethylnonyl ether, or a combination thereof, but it is not limited thereto. In accordance with some embodiments, the photocatalyst layer 18 further includes photocatalyst materials, for example, doped in one of the anti-reflection layer 18a and the anti-smudge layer 18b, or doped in both the anti-reflection layer 18a and the anti-smudge layer 18b. In accordance with some embodiments, the photocatalyst materials may include metal compounds or composites thereof, for example, titanium dioxide (TiO₂) hydrosol, composite of titanium dioxide (TiO₂) and tin dioxide (SnO₂), composite of titanium dioxide (TiO₂) and silicon carbide (SiC), composite of titanium dioxide (TiO₂) and silicon dioxide (SiO₂) , zinc oxide (ZnO), cadmium sulfide (CdS), gallium arsenide (GaAs), silicon carbide (SiC), tungsten trioxide (WO₃), strontium titanate (SrTiO₃), cadmium selenide (CdSe), or a combination thereof, but it is not limited thereto.

In accordance with some embodiments, in the cover plate 14, the relative positional relationship between the substrate 16, the photocatalyst layer 18 and the light adjustment layer 20 may include, for example, the photocatalyst layer 18 is disposed on the substrate 16, and the light adjustment layer 20 is disposed on the photocatalyst layer 18, as shown in FIG. 1, but it is not limited thereto. In accordance with some embodiments, the light adjustment layer 20 may also be disposed on the substrate 16, and the photocatalyst layer 18 is disposed on the light adjustment layer 20 (not shown). In accordance with some embodiments, the photocatalyst layer 18 may be further mixed with, for example, a UV absorber to omit the light adjustment layer 20.

In accordance with some embodiments, the substrate 16 may include, for example, a glass substrate, a plastic substrate, or a combination thereof, but it is not limited thereto. In accordance with some embodiments, the plastic substrate may include, for example, polyethylene naphthalate (PEN), polyethylene terephthalate (PET), polyether sulfone (PES), polycarbonate (PC), polyacrylate (PA), polysiloxane, polynorbornene (PNB), polyetheretherketone (PEEK), polyetherimide (PEI), polyimide (PI), or a combination thereof, but it is not limited thereto.

In accordance with some embodiments, the electronic device 10 further includes an ultraviolet (UV) light source. In accordance with some embodiments, the UV light source may include, for example, a side-entry light source, a movable light source, a rotatable light source, a projectable light source, a hidden light source, or a direct-type light source, or a combination thereof, but it is not limited thereto.

The configuration of the side-entry UV light source is further illustrated in FIG. 2 below. FIG. 2 is a perspective view of the electronic device 10.

As shown in FIG. 2, a fixed side-entry UV light source 22 is provided adjacent to the side 14s of the cover plate 14 to irradiate UV light 24 from the side 14s of the cover plate 14 to the inside of the cover plate 14. In accordance with some embodiments, the side-entry UV light source 22 may include, for example, a direct light source or using liquid crystals to control its opening and closing, but it is not limited thereto. A photocatalyst layer and a light adjustment layer (not shown) are provided on the surface 14_{T} of the cover plate 14. The UV light 24 incident onto the cover plate 14 excites the photocatalyst layer to produce a photocatalytic reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease. In addition, in accordance with some embodiments, when the light adjustment layer includes a UV absorber, an anti-UV patch, or an anti-UV optical film, the UV light 24 incident onto the cover plate 14 can be absorbed by the light adjustment layer, so that the UV light 24 is not easily emitted from the cover plate 14 to human eyes. In accordance with some embodiments, when the light adjustment layer includes a liquid-crystal film, the light adjustment layer can control the degree and timing of outward penetration of the UV light 24 incident onto the cover plate 14. In accordance with some embodiments, when the light adjustment layer includes a total reflection film, the light adjustment layer can cause the UV light 24 incident onto the cover plate 14 to be completely reflected in the cover plate 14, so that the UV light 24 is not easily emitted from the cover plate 14 to human eyes.

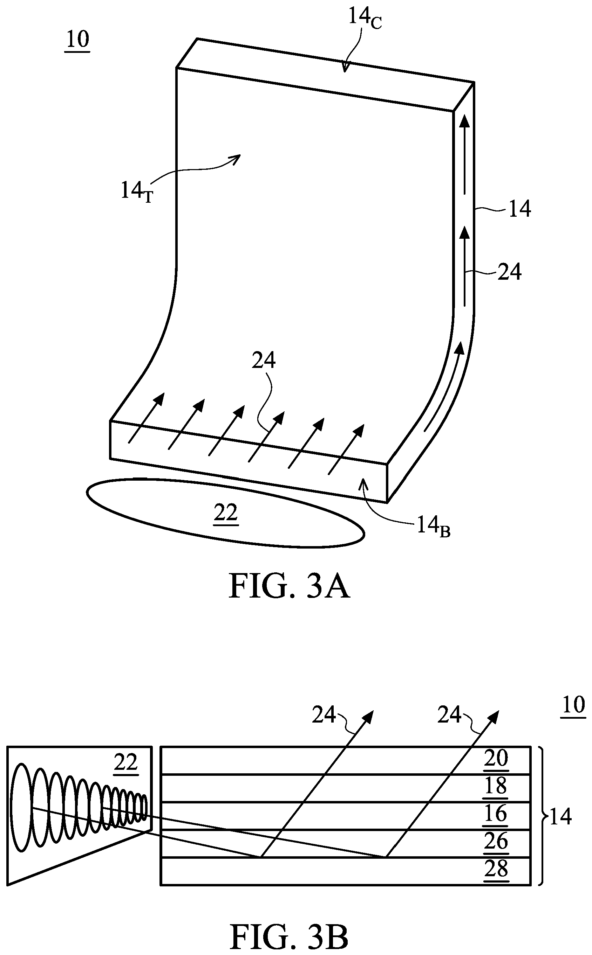

The configuration of the side-entry UV light source is further illustrated in FIGS. 3A and 3B below. FIG. 3A is a perspective view of the electronic device 10. FIG. 3B is a cross-sectional view of the electronic device 10.

As shown in FIG. 3A, a fixed side-entry UV light source 22 is provided adjacent to the lower side 14_{B} of the cover plate 14 to irradiate UV light 24 from the lower side 14_{B} of the cover plate 14 to the inside of the cover plate 14, but it is not limited thereto. In accordance with some embodiments, the fixed side-entry UV light source 22 may also be disposed adjacent to the upper side 14_{C} (not shown) of the cover plate 14 to irradiate the UV light 24 from the upper side 14_{C} of the cover plate 14 to the inside of the cover plate 14. In accordance with some embodiments, the side-entry UV light source 22 may include, for example, a direct light source or using liquid crystals to control its opening and closing, but it is not limited thereto. A photocatalyst layer and a light adjustment layer (not shown) are provided on the surface 14_{T} of the cover plate 14. The UV light 24 incident onto the cover plate 14 excites the photocatalyst layer to produce a photocatalytic reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease. In addition, in accordance with some embodiments, when the light adjustment layer includes a UV absorber, an anti-UV patch, or an anti-UV optical film, the UV light 24 incident onto the cover plate 14 can be absorbed by the light adjustment layer, so that the UV light 24 is not easily emitted from the cover plate 14 to human eyes. In accordance with some embodiments, when the light adjustment layer includes a liquid-crystal film, the light adjustment layer can control the degree and timing of outward penetration of the UV light 24 incident onto the cover plate 14. In accordance with some embodiments, when the light adjustment layer includes a total reflection film, the light adjustment layer can cause the UV light 24 incident onto the cover plate 14 to be completely reflected in the cover plate 14, so that the UV light 24 is not easily emitted from the cover plate 14 to human eyes. In accordance with some embodiments, the outer shape of the cover plate 14 may include, for example, a flat surface or a curved surface (as shown in FIG. 3A ), but it is not limited thereto.

Referring to FIG. 3B, a light-guide film 26 and a reflection sheet 28 are further provided below the cover plate 14 so that the UV light 24 emitted from the side-entry UV light source 22 is uniformly diffused to the entire cover plate 14 through the light-guide film 26 and the reflection sheet 28.

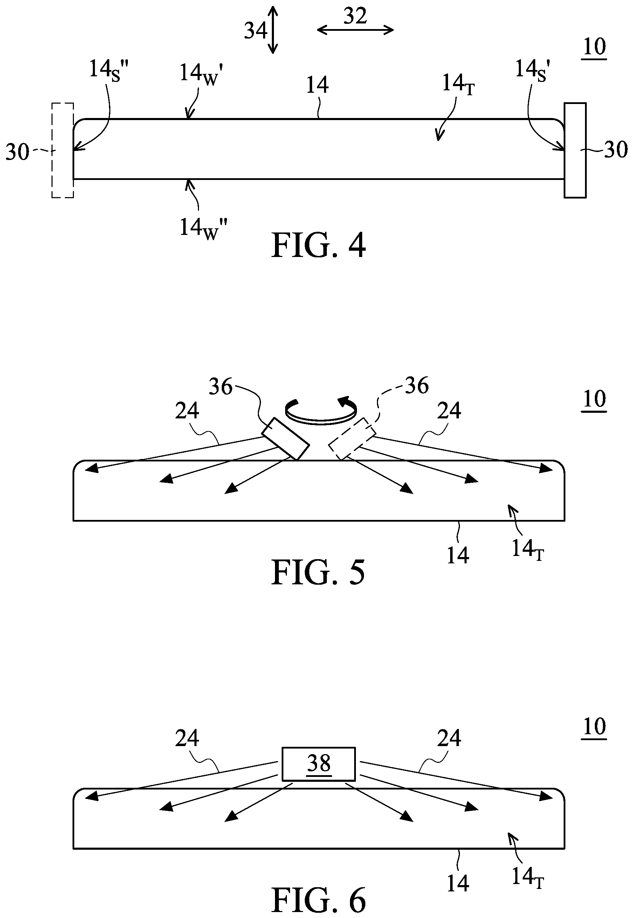

The configuration of the movable UV light source is further illustrated in FIG. 4 below. FIG. 4 is a top view of the electronic device 10.

As shown in FIG. 4, a movable UV light source 30 is provided adjacent to the first side 14s' of the cover plate 14. The UV light emitted by the movable UV light source 30 irradiates the surface 14_{T} of the cover plate 14 in a vertical direction 34, and the movable UV light source 30 moves from the first side 14s' of the cover plate 14 to the second side 14s" of the cover plate 14 along a horizontal direction 32, but it is not limited to thereto. In accordance with some embodiments, the movable UV light source 30 may also move along the vertical direction 34 from the third side 14_{W}' of the cover plate 14 to the fourth side 14_{W}" of the cover plate 14 (not shown). During the irradiation process, the UV light irradiates the cover plate 14 but does not irradiate areas outside the cover plate 14. In accordance with some embodiments, the movable UV light source 30 may include, for example, a direct light source or using liquid crystals to control its opening and closing, but it is not limited thereto. A photocatalyst layer (not shown) is provided on the surface 14_{T} of the cover plate 14. The UV light irradiated on the surface 14_{T} of the cover plate 14 excites the photocatalyst layer to produce a photocatalyst reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease. In accordance with some embodiments, the UV light emitted by the mobile UV light source 30 may be irradiated on the surface 14_{T} of the cover plate 14 in a non-vertical direction, and the mobile UV light source 30 moves from the first side 14s' to the second side 14s" of the cover plate 14 along the horizontal direction 32, but it is not limited thereto. In accordance with some embodiments, the movable UV light source 30 may also move from the third side 14_{W}' to the fourth side 14_{W}" of the cover plate 14 along the non-vertical direction (not shown).

The configuration of the rotatable UV light source is further illustrated in FIG. 5 below. FIG. 5 is a top view of the electronic device 10.

As shown in FIG. 5, a fixed rotatable UV light source 36 is provided above the cover plate 14. The rotatable UV light source 36 irradiates the surface 14_{T} of the cover plate 14 in an omni-directional rotation manner, for example, irradiating the surface 14_{T} of the cover plate 14 by rotating left, right, up and down. During the irradiation process, the UV light 24 irradiates the cover plate 14 but does not irradiate areas outside the cover plate 14. In accordance with some embodiments, the rotatable UV light source 36 may include, for example, a direct light source or using liquid crystals to control its opening and closing, but it is not limited thereto. A photocatalyst layer (not shown) is provided on the surface 14_{T} of the cover plate 14. The UV light 24 irradiated on the surface 14_{T} of the cover plate 14 excites the photocatalyst layer to produce a photocatalyst reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease.

The configuration of the projectable UV light source is further illustrated in FIG. 6 below. FIG. 6 is a top view of the electronic device 10.

As shown in FIG. 6, a fixed projectable UV light source 38 is provided above the cover plate 14. The projectable UV light source 38 irradiates the surface 14_{T} of the cover plate 14 in all directions. For example, the UV light 24 emitted by the projectable UV light source 38 irradiates the entire surface 14_{T} of the cover plate 14 at the same time. During the irradiation process, the UV light 24 irradiates the cover plate 14 but does not irradiate areas outside the cover plate 14. In accordance with some embodiments, the projectable UV light source 38 may include, for example, a direct light source or using liquid crystals to control its opening and closing, but it is not limited thereto. A photocatalyst layer (not shown) is provided on the surface 14_{T} of the cover plate 14. The UV light 24 irradiated on the surface 14_{T} of the cover plate 14 excites the photocatalyst layer to produce a photocatalyst reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease.

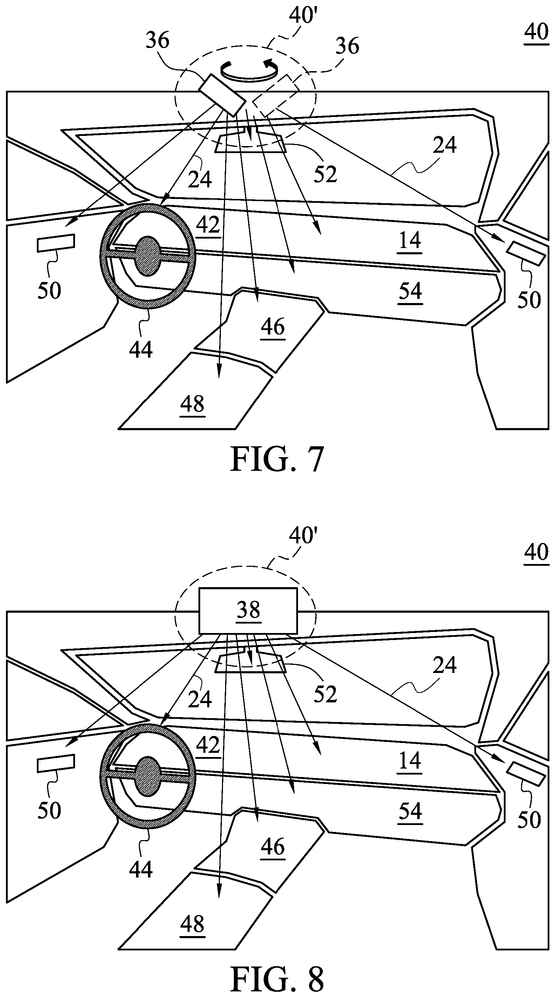

The configuration of the rotatable UV light source is further illustrated in FIG. 7 below. FIG. 7 is a schematic view of an interior space of a car.

As shown in FIG. 7, a fixed rotatable UV light source 36 is provided on a top portion 40' of a vehicle interior space 40, but it is not limited thereto. In accordance with some embodiments, the fixed rotatable UV light source 36 (not shown) is provided on a central armrest 48 of the vehicle interior space 40. In accordance with some embodiments, the fixed rotatable UV light source 36 is installed at any appropriate position in the vehicle interior space 40. The rotatable UV light source 36 irradiates various accessories located in the vehicle interior space 40 in an omni-directional rotation manner, for example, irradiating various accessories that people in the car have the opportunity to touch, including an instrument panel 42, a touch screen (i.e. a cover plate) 14, a steering wheel 44, a center console 46, a center armrest 48, a door handle 50, a rear mirror 52, and an interior panel 54 located in the vehicle interior space 40, by rotating left, right, up and down. During the irradiation process, the UV light 24 not only irradiates the touch screen (i.e. the cover plate) 14, but it also irradiates various accessories other than the touch screen (i.e. the cover plate) 14. In accordance with some embodiments, the rotatable UV light source 36 may include, for example, a direct light source or using liquid crystals to control its opening and closing, but it is not limited thereto. A photocatalyst layer (not shown) is provided on the surfaces of various accessories in the vehicle interior space 40. The UV light 24 irradiated on the surfaces of various accessories in the vehicle interior space 40 excites the photocatalyst layer to produce a photocatalytic reaction. The organic matter is synthesized on the surfaces of various accessories, or the organic matter on the surfaces of various accessories is decomposed, so that various accessories located in the vehicle interior space 40 can achieve the effect of spontaneously cleaning dirt and grease. In accordance with some embodiments, since the rotatable UV light source 36 irradiates various accessories located in the vehicle interior space 40 in the omni-directional rotation manner, the UV light irradiation process initiated by the rotatable UV light source 36 is suitable for execution when the person is not in the vehicle.

The configuration of the projectable UV light source is further illustrated in FIG. 8 below. FIG. 8 is a schematic view of an interior space of a car.

As shown in FIG. 8, a fixed projectable UV light source 38 is provided on a top portion 40' of a vehicle interior space 40, but it is not limited thereto. In accordance with some embodiments, the fixed projectable UV light source 38 (not shown) is provided on a central armrest 48 of the vehicle interior space 40. In accordance with some embodiments, the fixed projectable UV light source 38 is installed at any appropriate position in the vehicle interior space 40. The projectable UV light source 38 irradiates various accessories located in the vehicle interior space 40 in all directions. For example, the UV light 24 emitted by the projectable UV light source 38 irradiates various accessories that people in the car have the opportunity to touch, including an instrument panel 42, a touch screen (i.e. a cover plate) 14, a steering wheel 44, a center console 46, a center armrest 48, a door handle 50, a rear mirror 52, and an interior panel 54 located in the vehicle interior space 40, at the same time. During the irradiation process, the UV light 24 not only irradiates the touch screen (i.e. the cover plate) 14, but it also irradiates various accessories other than the touch screen (i.e. the cover plate) 14. In accordance with some embodiments, the projectable UV light source 38 may include, for example, a direct light source or using liquid crystals to control its opening and closing, but it is not limited thereto. A photocatalyst layer (not shown) is provided on the surfaces of various accessories in the vehicle interior space 40. The UV light 24 irradiated on the surfaces of various accessories in the vehicle interior space 40 excites the photocatalyst layer to produce a photocatalytic reaction. The organic matter is synthesized on the surfaces of various accessories, or the organic matter on the surfaces of various accessories is decomposed, so that various accessories located in the vehicle interior space 40 can achieve the effect of spontaneously cleaning dirt and grease. In accordance with some embodiments, since the projectable UV light source 38 irradiates various accessories located in the vehicle interior space 40 in all directions, the UV light irradiation process initiated by the projectable UV light source 38 is suitable for execution when the person is not in the vehicle.

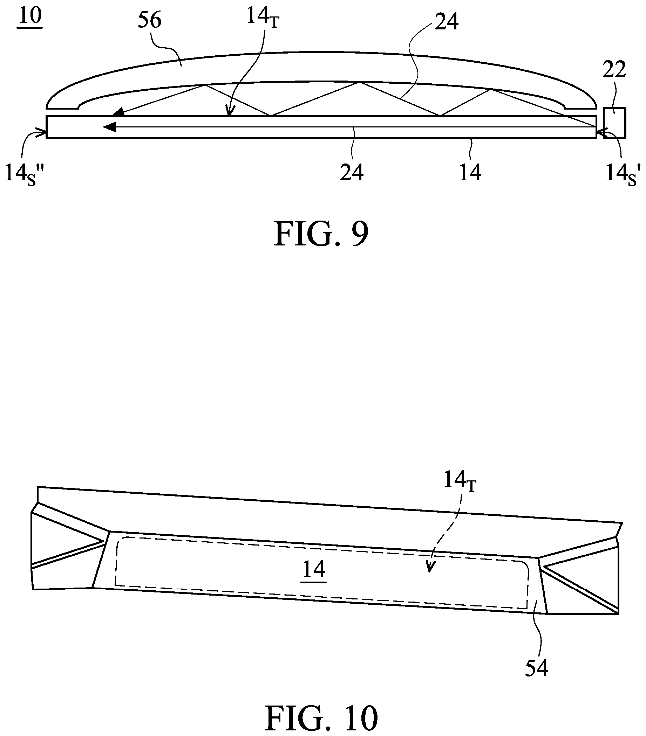

The configuration of the side-entry UV light source is further illustrated in FIG. 9 below. FIG. 9 is a cross-sectional view of the electronic device 10.

As shown in FIG. 9, a fixed side-entry UV light source 22 is provided adjacent to the first side 14s' of the cover plate 14 to irradiate UV light 24 from the first side 14s' of the cover plate 14 to the interior and surface 14_{T} of the cover plate 14. The second side 14s" of the cover plate 14 is coated with, for example, a UV absorber. First, a movable light-shielding member 56 is actuated to cover the cover plate 14 in an up-to-down or left-to-right movement. Then, the side-entry UV light source 22 is turned on to perform the UV irradiation process. At this time, since the top of the cover plate 14 is covered with the movable light-shielding member 56, the UV light 24 will not radiate to areas outside the cover plate 14. When the UV irradiation process is not required, the movable light-shielding member 56 can be stored. In accordance with some embodiments, the optical properties of the movable light-shielding member 56 are similar to those of a total reflection mirror or a total reflection layer. In accordance with some embodiments, the side-entry UV light source 22 may include, for example, a direct light source or using liquid crystals to control its opening and closing, but it is not limited thereto. In addition, a photocatalyst layer (not shown) is provided on the surface 14_{T} of the cover plate 14. The UV light 24 emitted from the side-entry UV light source 22 excites the photocatalyst layer to produce a photocatalytic reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease.

The configuration of the hidden UV light source is further illustrated in FIG. 10 below. FIG. 10 is a schematic view of an interior space of a car.

As shown in FIG. 10, the cover plate 14 is stored in a containment mechanism in a vehicle through a movable mechanical component, for example, stored in a vehicle interior panel 54. An UV-light irradiation is performed using a hidden UV light source (not shown) hidden in the containment mechanism. The types of UV light sources shown in FIGS. 2 to 6 are all suitable for the hidden UV light source here. In accordance with some embodiments, the hidden UV light source may include, for example, a direct light source or using liquid crystals to control its opening and closing, but it is not limited thereto. A photocatalyst layer (not shown) is provided on the surface 14_{T} of the cover plate 14. The UV light emitted from the hidden UV light source excites the photocatalyst layer to produce a photocatalytic reaction. The organic matter is synthesized on the surface 14_{T} of the cover plate 14, or the organic matter on the surface 14_{T} of the cover plate 14 is decomposed, so that the cover plate 14 can achieve the effect of spontaneously cleaning dirt and grease. In accordance with some embodiments, since the hidden UV light source performs the UV-light irradiation process within the containment mechanism, this type of UV-light irradiation process can be performed regardless of whether the person is in the vehicle or not.

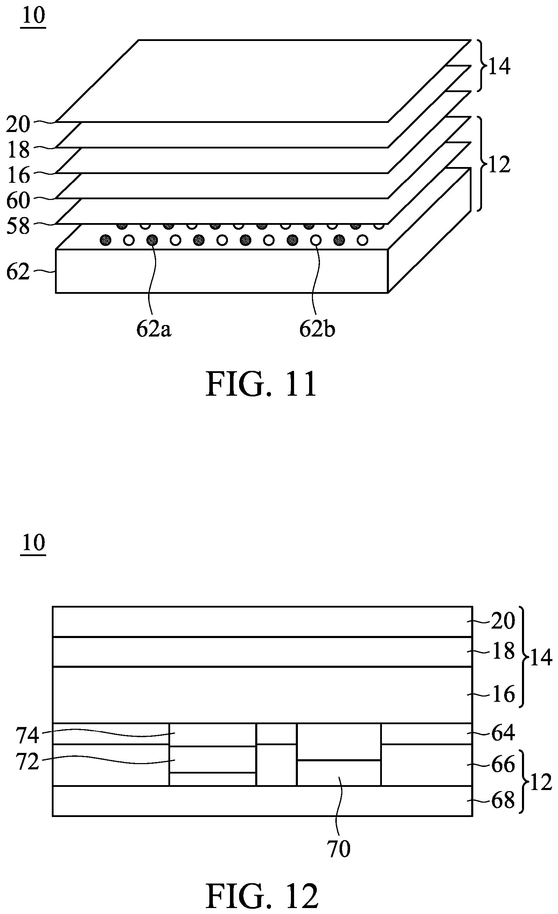

The configuration of the direct-type UV light source is further illustrated in FIG. 11 below. FIG. 11 is a three-dimensional view of the electronic device 10.

As shown in FIG. 11, the electronic device 10 includes a display panel 12 and a cover plate 14. The cover plate 14 is disposed relative to the display panel 12. The display panel 12 may include, for example, a thin-film transistor (TFT) array 58 and color filters 60, but it is not limited thereto. The cover plate 14 includes a substrate 16, a photocatalyst layer 18, and a light adjustment layer 20. The photocatalyst layer 18 is disposed on the substrate 16. The light adjustment layer 20 is disposed on the photocatalyst layer 18. In the embodiment shown in FIG. 11, the substrate 16, the photocatalyst layer 18, and the light adjustment layer 20 in the electronic device 10 are similar to the embodiment shown in FIG. 1 in terms of type, material, structural composition, mode of action, and relative positional relationship, and will not be described again here.

In FIG. 11, a direct-type UV light source 62 is used as a light source to trigger the photocatalyst layer 18. In accordance with some embodiments, the direct-type UV light source 62 may include, for example, an UV light source and a non-UV light source at the same time. In accordance with some embodiments, the direct-type UV light source 62 may include, for example, a white light-emitting diode 62a and an UV light-emitting diode 62b at the same time, but it is not limited thereto. In accordance with some embodiments, the direct-type UV light source 62 may include, for example, a red light-emitting diode, a green light-emitting diode, a blue light-emitting diode, a white light-emitting diode, and an UV light-emitting diode at the same time, but it is not limited thereto. Here, the direct-type UV light source 62 including both the white light-emitting diode 62a and the UV light-emitting diode 62b is taken as an example for illustration. The white light-emitting diode 62a and the UV light-emitting diode 62b can be switched to each other according to display requirements. Generally speaking, when the touch screen is operating, the white light-emitting diode 62a is turned on, and when there is no one in the car, the UV light-emitting diode 62b is turned on. The UV light emitted by the direct-type UV light source 62 excites the photocatalyst layer 18 provided on the surface of the cover plate 14 to generate a photocatalyst reaction. The organic matter is synthesized on the surface of the cover plate 14, or the organic matter on the surface of the cover plate 14 is decomposed, so that the cover plate 14 can achieve the effect of spontaneously cleaning dirt and grease.

The configuration of the light sensor in the electronic device is further illustrated in FIG. 12 below. FIG. 12 is a cross-sectional view of the electronic device 10.

As shown in FIG. 12, the electronic device 10 includes a display panel 12 and a cover plate 14. The cover plate 14 is disposed relative to the display panel 12 and adhered to the display panel 12 through a first interposer layer 64. The display panel 12 may include, for example, a display module 66 and a mechanical component 68, but it is not limited thereto. In accordance with some embodiments, the display module 66 may include, for example, a direct-type backlight (including an UV light source) or a side-entry backlight (including an UV light source), but it is not limited thereto. The cover plate 14 includes a substrate 16, a photocatalyst layer 18, and a light adjustment layer 20. The photocatalyst layer 18 is disposed on the substrate 16. The light adjustment layer 20 is disposed on the photocatalyst layer 18. In the embodiment shown in FIG. 12, the substrate 16, the photocatalyst layer 18, and the light adjustment layer 20 in the electronic device 10 are similar to the embodiment shown in FIG. 1 in terms of type, material, structural composition, mode of action, and relative positional relationship, and will not be described again here. In accordance with some embodiments, the first interposer layer 64 may include, for example, optically clear adhesive (OCA), but it is not limited thereto.

In FIG. 12, the display panel 12 further includes a light sensor, such as a camera module 70 or an ambient-light sensing module 72. In accordance with some embodiments, the ambient-light sensing module 72 may include, for example, an ambient-light sensor or an ambient-light sensing camera, but it is not limited thereto. The ambient-light sensing module 72 is adhered to the cover plate 14 through a second interposer layer 74. In accordance with some embodiments, the second interposer layer 74 may include, for example, ambient-light ink or a combination of optically clear adhesive (OCA) and an ambient-light filter, but it is not limited thereto. In accordance with some embodiments, when the camera module 70 or the ambient-light sensing module 72 detects that there is no person in the vehicle, the UV light source is actuated to irradiate the cover plate 14. The UV light emitted by the direct-type backlight (including an UV light source) or the side-entry backlight (including an UV light source) in the display module 66 excites the photocatalyst layer 18 provided on the surface of the cover plate 14 to generate a photocatalyst reaction. The organic matter is synthesized on the surface of the cover plate 14, or the organic matter on the surface of the cover plate 14 is decomposed, so that the cover plate 14 can achieve the effect of spontaneously cleaning dirt and grease.

The present disclosure provides a controllable UV light source on a car display that can irradiate a touch screen, and a device that can collect UV light or an in-car device that can prevent UV light from irradiating areas other than the touch screen. Also, in the present disclosure, the surface of the touch screen is coated with a photocatalyst layer, and a device that can detect whether there is a person in the car is provided. The UV light source can be turned on or off remotely using the car key or in-car software system. If a person is detected in the car, the UV light source will not be actuated.

Although some embodiments of the present disclosure and their advantages have been described in detail, it should be understood that various changes, substitutions and alterations can be made herein without departing from the spirit and scope of the disclosure as defined by the appended claims. The features of the various embodiments can be used in any combination as long as they do not depart from the spirit and scope of the present disclosure. Moreover, the scope of the present application is not intended to be limited to the particular embodiments of the process, machine, manufacture, composition of matter, means, methods and steps described in the specification. As one of ordinary skill in the art will readily appreciate from the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods or steps. In addition, each claim constitutes an individual embodiment, and the claimed scope of the present disclosure includes the combinations of the claims and embodiments. The scope of protection of present disclosure is subject to the definition of the scope of the appended claims. Any embodiment or claim of the present disclosure does not need to meet all the purposes, advantages, and features disclosed in the present disclosure.

## Claims

1. An electronic device, comprising:
a display panel; and
a cover plate disposed relative to the display panel, wherein the cover plate comprises:
a substrate;
a photocatalyst layer disposed on the substrate; and
a light adjustment layer disposed on the substrate,
wherein the light adjustment layer adjusts optical properties of ultraviolet (UV) light incident onto the cover plate.

2. The electronic device as claimed in claim 1, wherein the optical properties comprise absorption rate, transmittance, reflectivity and traveling direction of the UV light incident onto the cover plate.

3. The electronic device as claimed in claim 1, wherein the light adjustment layer comprises a UV absorber, an anti-UV patch, an anti-UV optical film, a liquid-crystal film, or a total reflection film.

4. The electronic device as claimed in claim 1, wherein the photocatalyst layer comprises an anti-reflection layer, an anti-smudge layer comprising fluorine-free materials, or a combination thereof.

5. The electronic device as claimed in claim 4, wherein the fluorine-free material comprises acrylate polymers, octadecyltrimethoxysilane, tetraethoxysilane, or polyethylene glycol trimethylnonyl ether.

6. The electronic device as claimed in claim 4, wherein the anti-smudge layer further comprises photocatalyst material comprising titanium dioxide (TiO₂) hydrosol, composite of titanium dioxide (TiO₂) and tin dioxide (SnO₂), composite of titanium dioxide (TiO₂) and silicon carbide (SiC), composite of titanium dioxide (TiO₂) and silicon dioxide (SiO₂) , zinc oxide (ZnO), cadmium sulfide (CdS), gallium arsenide (GaAs), silicon carbide (SiC), tungsten trioxide (WO₃), strontium titanate (SrTiO₃), cadmium selenide (CdSe), or a combination thereof.

7. The electronic device as claimed in claim 1, further comprising at least one UV light source.

8. The electronic device as claimed in claim 7, wherein the at least one UV light source comprises a side-entry light source, a movable light source, a rotatable light source, a projectable light source, a hidden light source, or a direct-type light source, and preferably
wherein the side-entry light source is disposed adjacent to a side of the cover plate, and/or
wherein the movable light source is disposed adjacent to a side of the cover plate, and /or
wherein the rotatable light source is disposed above the cover plate, and/or
wherein the projectable light source is disposed above the cover plate.

9. The electronic device as claimed in claim 8, wherein the cover plate and the hidden light source are stored in a containment mechanism in a vehicle.

10. The electronic device as claimed in claim 8, further comprising a movable light-shielding member covering the cover plate.

11. The electronic device as claimed in claim 7, further comprising a non-UV light source.

12. The electronic device as claimed in claim 1, further comprising a light sensor.

13. An electronic device, comprising:
at least one UV light source; and
a cover plate disposed relative to the at least one UV light source, wherein the cover plate comprises:
a substrate; and
an anti-smudge layer disposed on the substrate,
wherein the anti-smudge layer comprises fluorine-free materials.

14. The electronic device as claimed in claim 13, wherein the fluorine-free material comprises acrylate polymers, octadecyltrimethoxysilane, tetraethoxysilane, or polyethylene glycol trimethylnonyl ether.

15. The electronic device as claimed in claim 13, wherein the anti-smudge layer further comprises photocatalyst material comprising titanium dioxide (TiO₂) hydrosol, composite of titanium dioxide (TiO₂) and tin dioxide (SnO₂), composite of titanium dioxide (TiO₂) and silicon carbide (SiC), composite of titanium dioxide (TiO₂) and silicon dioxide (SiO₂) , zinc oxide (ZnO), cadmium sulfide (CdS), gallium arsenide (GaAs), silicon carbide (SiC), tungsten trioxide (WO₃), strontium titanate (SrTiO₃), cadmium selenide (CdSe), or a combination thereof.
